# EUROPEAN PATENT SPECIFICATION

(11) **EP 2 482 108 B1**
(45) Date of publication and mention of the grant of the patent: **21.05.2014**
(21) Application number: 11152698.4
(22) Date of filing: 31.01.2011
(51) Int. Cl.: G02B 6/38, G02B 6/44

(54) **Cable plug assembly**
Kabelsteckeranordnung
Ensemble formant prise de câble

(43) Date of publication of application: 01.08.2012
(73) Proprietor: Tyco Electronics Raychem BVBA, 3010 Kessel-Lo (BE)
(72) Inventor: Claessens, Bart, Mattie, 3500 Hasselt (BE)
(74) Representative: Patentanwaltskanzlei WILHELM & BECK

(56) References cited:
- EP-A1- 2 148 231
- EP-A2- 0 213 672
- EP-A2- 1 139 127
- EP-A2- 1 168 018
- JP-A- 2002 296 470
- US-A- 5 199 095

## Description

The present invention relates to a cable plug assembly according to claim 1.

Cable plug assemblies are known in the state of the art. In conjunction with seal blocks they are used for providing a sealed feedthrough of a cable through a wall of e.g. a box or a body housing of an apparatus.

Cables that comprise a plurality of optical fibers enclosed in a common cable jacket are known in the state of the art.

Fiber holders for holding a plurality of individual optical fibers are also known in the state of the art. Examples of conventional fiber holders are described in the documents US 5,566,269 and US 4, 762, 387.

Document EP 1 168 018 A2 describes a fanout connector assembly provided for fiber optic cables, each including a plurality of optical fibers. The assembly includes at least two fanout connectors, each having a housing with a passage for receiving a fiber optic cable along an axis. A fanout member in the housing spreads the individual optical fibers of the cable transversely of the axis. Complementary interengaging stacking members on the housings of the two connectors align and hold the connectors in stacked relationship with one connector on top of the other connector. An individual connector includes a base housing and a cover with complementary inter-engaging strain relief members and complementary interengaging latch members therebetween. The strain relief members and the latch members are respectively interengages automatically in response to mounting the cover on the base housing, but the strain relief members are at least partially interengaged prior to interengagement of the latch members.

It is an object of the present invention to provide an improved cable plug assembly. This objective is achieved with a cable plug assembly according to claim 1. Preferred embodiments are disclosed in the dependent claims.

A cable plug assembly according to the invention comprises a cable sleeve with a cable receiving section for receiving a cable therein. The cable plug assembly further comprises a fiber holder for fastening a plurality of fibers. The cable sleeve and the fiber holder are connected via an intermediate section. Advantageously, this cable plug assembly allows for an easy installation and provides a compact cable fixation solution.

Preferentially, the cable sleeve comprises a base part and a cover part, said base part and said cover part being connectable. Advantageously, this allows for introducing a cable into the cable sleeve.

Preferentially, said base part and said cover part are connectable by means of a second snap-fit. Advantageously, this allows for a simple and quick assembly of the cable sleeve.

According to a further development, the cable receiving section of the cable sleeve comprises fixation means for gripping a jacket of the cable. Advantageously, the fixation means provide both an axial fixation and a strain relieve for the cable and a sealing of the cable sleeve and the cable arranged therein.

According to a further development, the fiber holder comprises a plurality of substantially parallel slots for receiving a plurality of fibers, wherein the cable plug assembly further comprises a bracket for retaining said fibers in said slots, said bracket being connectable to the fiber holder. Advantageously, the fiber holder prevents a disarrangement of the fibers and can also provide an axial fixation of the fibers.

Preferentially, said bracket is connectable to the fiber holder by means of a first snap-fit. Advantageously, the snap-fit allows for an easy and quick assembly of the fiber holder and the bracket.

Preferentially, each parallel slot comprises a width that is larger than a diameter of a fiber. Advantageously, this allows for an easy insertion of the fibers into the slots.

In a preferred embodiment of the cable plug assembly, each slot comprises optionally at least one first rib arranged substantially perpendicular to a running direction of a fiber when said fiber is arranged in said slot, wherein the bracket comprises a plurality of high ribs, wherein each said high rib is provided to be arranged in one of said slots when the bracket is connected to the fiber holder. Advantageously, the high ribs press the fibers against the first ribs, while the first ribs improve the fixation of the fibers in the fiber holder and provide an axial fixation of the fibers.

In a further preferred embodiment, two substantially parallel planes are formed from a surface of one of said high ribs and a surface of one of said slots when said bracket is connected to the fiber holder. One or more of the plurality of fibers can be sandwiched between said substantially parallel planes. Advantageously, sandwiching the fibers between substantially parallel planes ensures that about the same pressure force is exerted on each of the fibers, while in a conventional design with downwardly narrowing slots lower fibers receive a significantly higher pressure force than fibers on the top.

According to a further development, the bracket is connected to the fiber holder by a separable connection. Advantageously, this allows for a cost-efficient manufacture and prevents the bracket from getting lost during delivery of the cable plug assembly. The bracket may for example be separated from the fiber holder only directly before the assembly of the fiber holder.

According to a further development of the cable plug assembly, the cable plug assembly comprises an enclosure for guiding the fibers between the cable sleeve and the fiber holder, wherein the enclosure is connectable to the intermediate section. Advantageously, the enclosure prevents a buckling of the fibers in the area between the cable sleeves and the fiber holder.

Preferentially, the enclosure is connectable to the intermediate section by means of a third snap-fit. Advantageously, the snap-fit allows for an easy and quick assembly of the enclosure.

Preferentially, the cable sleeve comprises a first flange arranged circumferentially around a first opening of the cable receiving section and a section flange arranged circumferentially around a second opening of the cable receiving section. Advantageously, the first flange and the second flange can form a labyrinth seal when the cable plug assembly is arranged in a seal block.

According to a preferred embodiment, the cable sleeve is designed to be arranged in a cable port of a seal block for providing a sealed feedthrough of the cable and the first flange and the second flange are designed for forming a labyrinth seal between the first flange and the second flange and respective outer flanges arranged in the cable port of the seal block. Advantageously, the seal block can be integrated in a wall of a housing or a box for providing a sealed feedthrough of the cable.

Preferentially, the cable receiving section of the cable sleeve is provided to receive the cable without a foam arranged on a jacket of the cable. Advantageously, foam is not necessary for sealing and fixation of the cable. This simplifies the application of the cable plug assembly.

The invention will now be explained in more detail with reference to the Figures in which:
Figure 1 shows a perspective view of a first cable plug;
Figure 2 shows a perspective view of a cover part of a cable sleeve;
Figure 3 shows an enclosure of the first cable plug;
Figure 4 shows a perspective view of the first cable plug in a completely assembled state;
Figure 5 shows a perspective view of a seal block and the first cable plug;
Figure 6 shows a sectional view of the seal block;
Figure 7 shows a perspective view of a second cable plug;
Figure 8 shows a further perspective view of the second cable plug; and
Figure 9 shows a a sectional view of a fiber holder.

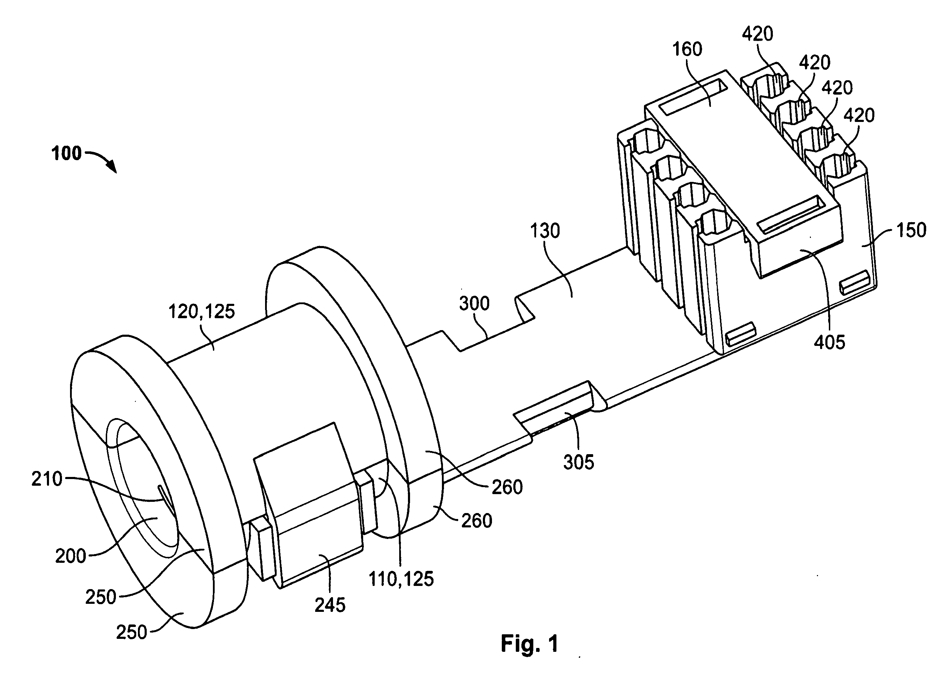

Figure 1 shows a perspective view of a first cable plug 100 according to a first embodiment. The first cable plug 100 is designed for being inserted into a seal block for providing a sealed feedthrough of a cable that contains a plurality of fibers. The cable may comprise a plurality of optical fibers or a plurality of metallic electrical fibers or leads. The cable plug 100 may for example provide a sealing level of IP55.

The first cable plug 100 comprises three sections arranged consecutively one after another in the running direction of the cable and the fibers of the cable. The first section comprises of a cable sleeve 125. The second section comprises of a guidance section 130. The third section comprises of a first fiber holder 150. The cable sleeve 125, the guidance section 130 and the first fiber holder 150 are respectively connected to each other. Preferentially, a base part 110 of the cable sleeve 125, the guidance section 130 and the first fiber holder 150 are formed integrally.

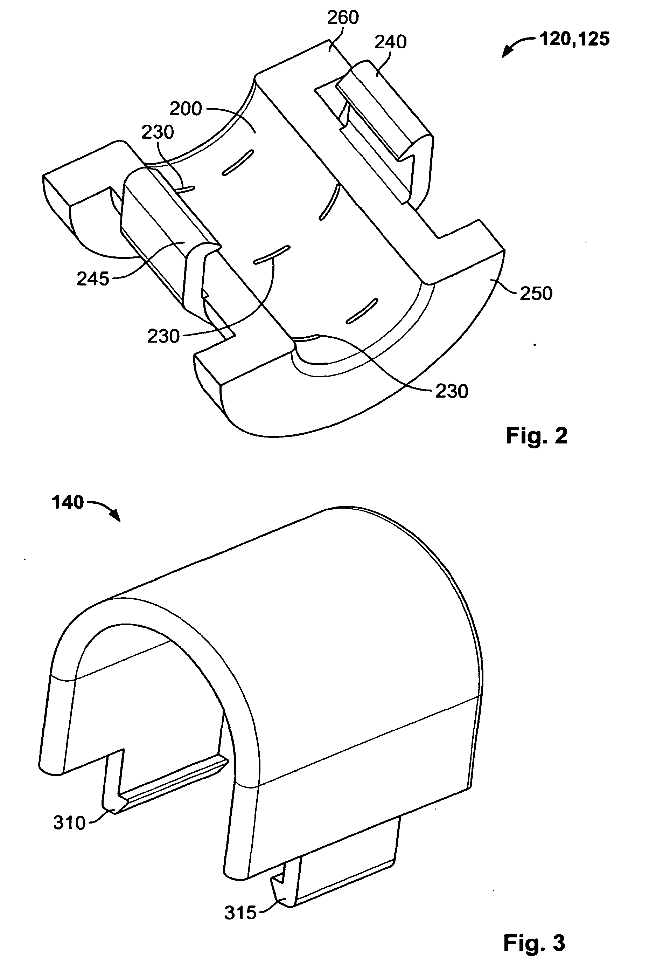

The cable sleeve 125 comprises of the base part 110 and a cover part 120. The cover part 120 is shown in detail in Figure 2. The base part 110 roughly comprises the shape of a half cylinder barrel with an inner cable receiving section 200 comprising the shape of a half circular cylinder. The cover part 120 also roughly comprises the shape of a half cylinder barrel. The cover part 120 also comprises a cable receiving section 200 with the shape of a half circular cylinder.

If the cover part 120 is connected to the base part 110, as shown in Figure 1, the cable receiving section 200 of the base part 110 and the cable receiving section 200 of the cover part 120 combine to form a cable receiving section 200 with the shape of a circular cylinder. The diameter of the cable receiving section 200 is such that it matches the diameter of a cable that is to be introduced into the first cable plug 100.

The base part 110 comprises a first locking bar and a second locking bar. The first and second locking bars are not visible in Figure 1. The cover part 120 comprises a first snap-fit cantilever 240 and a second snap-fit cantilever 245. The locking bars and the snap-fit cantilevers 240, 245 together form two snap-fits for connecting the cover part 120 to the base part 110. The snap-fits allow for an easy and quick connection of the cover part 120 to the base part 110. In other embodiments, the cover part 120 and the base part 110 may, however, be provided with alternative means of connecting the base part 110 and the cover part 120 with each other, for example with a cable tie.

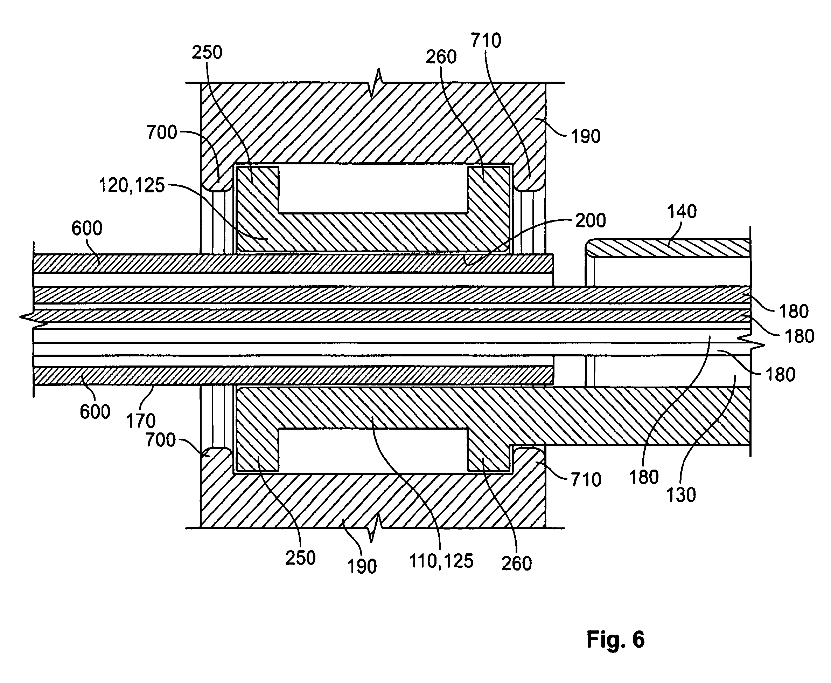

If the base part 110 and the cover part 120 are connected to each other to form the cable sleeve 125, they comprise a first flange 250 and a second flange 260. The first flange 250 is arranged around a first entrance or opening of the cable receiving section 200. The second flange 260 is arranged around a second entrance or opening of the cable receiving section 200. The purpose of the flanges 250, 260 will be explained in more detail below with respect to Figure 6.

The base part 110 comprises a plurality of first annular rib portions 210 arranged in the half cable receiving section 200. The cover part 120 comprises a plurality of second annular rib portions 230 arranged in the half cable receiving section 200. When the base part 110 and the cover part 120 are connected to each other, the annular rib portions 210, 230 are arranged annularly around an outer circumference of the cable receiving section 200 of the cable sleeve 125 or rather on an inner circumference of the cable sleeve 125.

In the example displayed in Figures 1 and 2, the cable receiving section 200 comprises three annular ribs 210, 230. There may, however, be more or fewer than tree annular ribs 210, 230. The annular ribs 210, 230 are provided for gripping a jacket of a cable introduced into the cable receiving section 200. The annular ribs 210, 230 thus combine the jacket of the cable with the cable sleeve 125 formed out of the base part 110 and the cover part 120 to provide a sealing and an axial fixture of the cable. This allows to arrange the cable in the cable sleeve 125 without providing any foam between the cable and the cable sleeve 125 but still provides a high degree of sealing.

The annular rib portions 210, 230 may slightly cut into the cable jacket. It is however preferred if the annular rib portions 210, 230 are designed to grab and fixate the cable without damaging the jacket of the cable.

Instead of the annular rib portions 210, 230 other fixation means may be provided on the base part 110 and on the cover part 120 for gripping and sealing the jacket of the cable. The annular rib portions 210, 230 may for example be replaced with small protrusions, gripping teeth, a cross-hatched pattern, or with other suitable means. All these fixation means are known to be equivalent.

The base part 110 is connected to the guidance section 130. The guidance section 130 is approximately bar-shaped and comprises a third locking bar 300 and a fourth locking bar 305 opposed to the third locking bar 300.

Figure 3 shows a perspective view of an enclosure 140 that may be arranged on the guidance section 130. The enclosure 140 comprises a U-shaped cross section with a third snap-fit cantilever 310 arranged on the end of one of the beams of the U-shaped enclosure 140 and a fourth snap-fit cantilever 315 arranged on the end of the other beam of the U-shaped enclosure 140. The snap-fit cantilevers 310, 315 can be snapped onto the locking bars 300, 305 of the guidance section 130.

The guidance section 130 and the enclosure 140 may comprise other means of connecting the guidance section 130 and the enclosure 140 then the snap-fit connections provided by the locking bars 300, 305 and the snap-fit cantilevers 310, 315.

The enclosure 140 serves for holding together a plurality of fibers arranged on the guidance section 130 and prevents buckling of the fibers in the area of the guidance section 130. In a simplified embodiment of the first cable plug 100 the enclosure 140 may be omitted.

The guidance section 130 is connected to the first fiber holder 150. The first fiber-holder 150 is approximately cuboid-shaped and comprises a plurality of parallel first slots 420. The first slots 420 are arranged in parallel to the longitudinal direction of the first cable plug 100. In the example depicted in Figure 1, the first fiber holder 150 comprises four parallel first slots 420. The width of each first slot 420 is dimensioned such that a fiber of a cable may be clamped in one of the first slots 420. Preferentially, each first slot 420 comprises a width that is slightly larger than a diameter of the fiber. A plurality of fibers may be stacked on top of each other in each of the first slots 420.

Figure 1 shows that a first bracket 160 is connected to the first fiber holder 150. The first bracket 160 is approximately bar-shaped. The first bracket 160 comprises a first snap-fit recess 400 arranged on one end of the first bracket 160 and a second snap-fit recess 405 arranged on the opposite end of the first bracket 160. The first fiber holder 150 comprises a first snap-fit hook and a second snap-fit hook arranged oppositely to the first snap-fit hook 410. The snap-fit hooks are not visible in Figure 1. The first bracket 160 is connected to the first fiber holder 150 by means of the snap-fit connections formed by the snap-fit recesses 400, 405 and the snap-fit hooks. In an alternative embodiment, the first fiber holder 150 and the first bracket 160 may be equipped with alternative means of connecting the first bracket 160 to the first fiber holder 150.

When connected to the first fiber holder 150, as shown in Figure 1, the first bracket 160 runs across the plurality of first slots 400, thereby preventing any fibers arranged in the first slots 420 from being removed from the first slots 420. The bracket may also exert a force on the first fiber holder 150 that slightly closes the first slots 420 to retain the fibers inside the first slots 420.

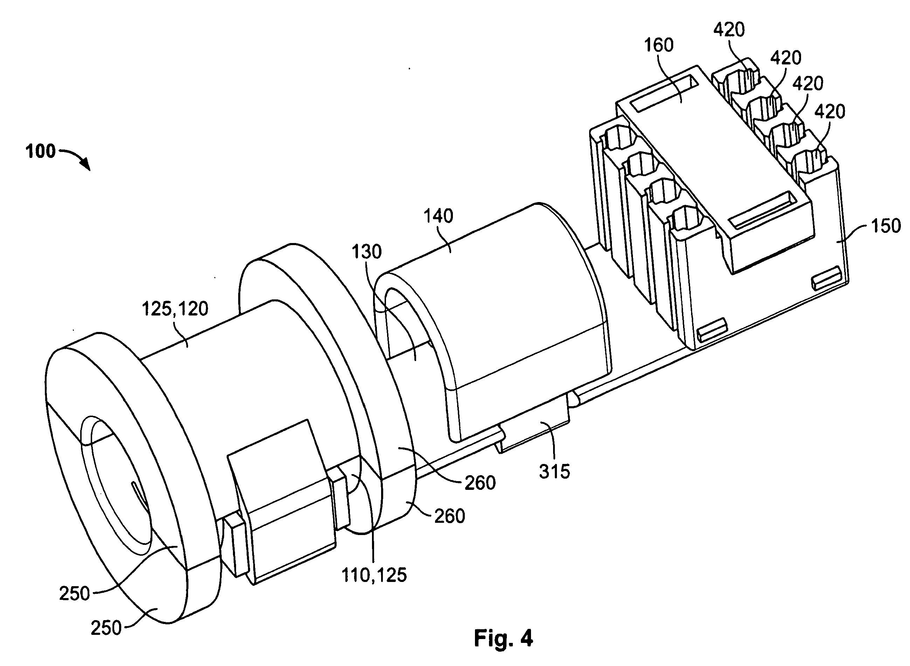

Figure 4 shows a perspective view of the first cable plug 100 with the enclosure 140 connected to the guidance section 130 of the first cable plug 100. The enclosure 140 forms a tunnel above the guidance section 130 for receiving and guiding a cable or individual fibers of a cable.

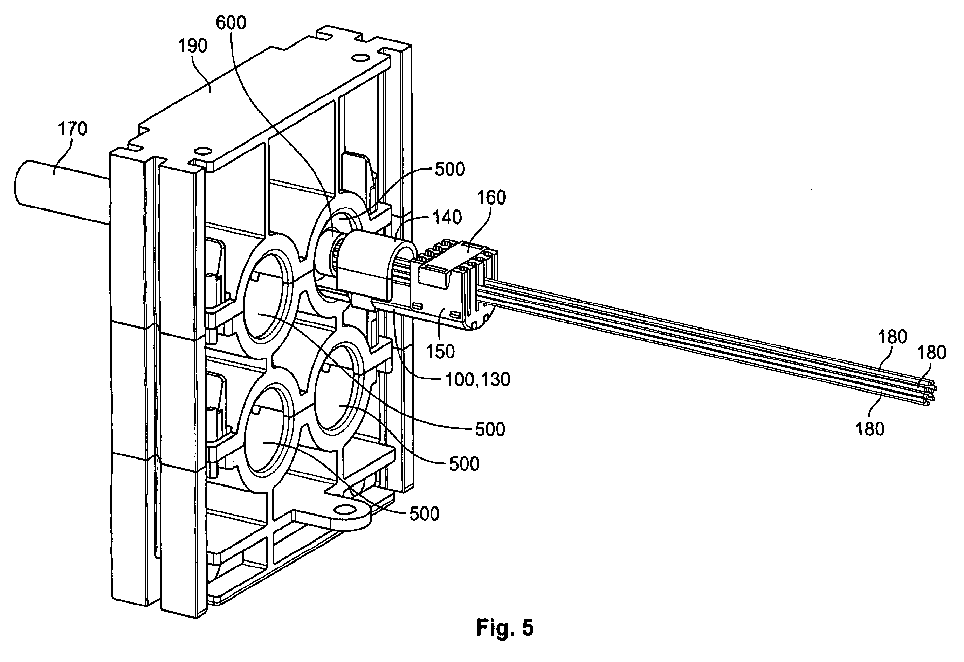

Figure 5 shows a perspective view of a seal block 190. The seal block 190 may be arranged in a wall of a housing of an apparatus or in a wall of any other kind of box for providing a sealed feedthrough for a cable 170 through the wall. The seal block 190 may for example provide a sealing level of IP55.

The seal block 190 provides a plurality of cable ports 500. In the example shown in Figure 5, the seal block 190 comprises four cable ports 500.

A cable 170 is arranged in the first cable plug 100. The cable 170 comprises a cable jacket 600 and a plurality of fibers 180 arranged in the cable jacket 600. The cable sleeve 125 formed out of the based part 110 and the cover part 120 of the first cable plug 100 is arranged in one of the cable ports 500 of the seal block 190.

Figure 6 shows a cross section through a cable port 500 of the seal block 190 with the first cable plug 100 arranged in the cable port 500. The cable jacket 600 of the cable 170 is arranged in the cable receiving section 200 of the cable sleeve 125 of the first cable plug 100. The diameter of the cable jacket 600 matches the diameter of the cable receiving section 200 such that the cable jacket 600 is sealed in the cable receiving section 200. Additionally, the first annular rib portions 210 and the second annular rib portions 230 arranged in the cable receiving section 200 have gripped the cable jacket 600 to improve the sealing of the cable jacket 600 arranged in the cable receiving section 200 and to fixate the cable 170 axially. Consequently, the cable 170 is sealed in the cable receiving section 200 without requiring any additional foam arranged between the cable 170 and the cable sleeve 125 in the cable receiving section 200.

The seal block 190 comprises a first outer flange 700 arranged around the entrance of the cable port 500 and a second outer flange 710 arranged around the exit of the cable port 500. The cable sleeve 125 is arranged in the cable port 500 between the first outer flange 700 and the second outer flange 710 such that the first flange 250 of the cable sleeve 125 is in contact with the first outer flange 700 and the second flange 260 of the cable sleeve 125 is in contact with the second outer flange 710. Together, the flanges 250, 260 and the outer flanges 700, 710 provide a labyrinth seal that ensures a leak-proof arrangement of the cable sleeve 125 inside the cable port 500.

The cable 170 comprises a plurality of fibers 180 arranged in the cable jacket 600. As can be seen in Figures 5 and 6, the cable jacket 600 of the cable 170 has been removed in the section of the cable 170 that is arranged outside the cable port 500 and runs towards the first fiber holder 150 of the first cable plug 100. The cable jacket 600 ends between the cable port 500 and the enclosure 140 arranged on the guidance section 130 of the first cable plug 100. Consequently, the fibers 180 run through the tunnel formed by the enclosure 140 and the guidance section 130 without the enclosing cable jacket 600. The enclosure 160 prevents the fibers 180 from bending or buckling in the area of the guidance section 130 and the enclosure 140.

Following the guidance section 130 and the enclosure 140, the fibers 180 are arranged in several of the first slots 420 of the first fiber holder 150. The first bracket 160 is mounted on the first fiber holder 150 to prevent the fibers 180 from being removed from the first slots 420.

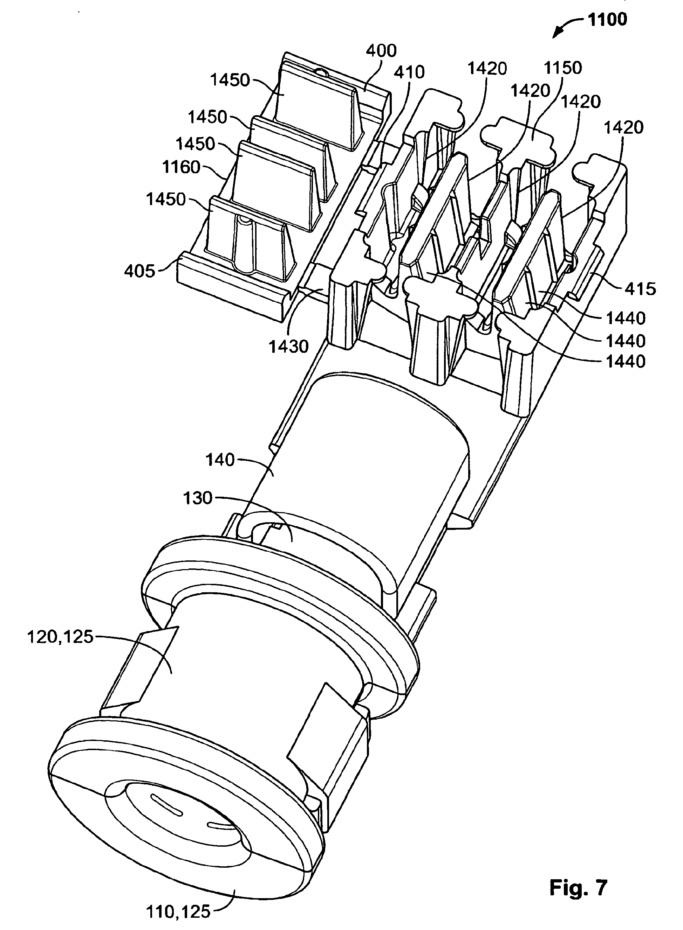

Figure 7 shows a perspective view of a second cable plug 1100 according to a second embodiment. The second cable plug 1100, like the first cable plug 100, comprises a base part 110 and a cover part 120 which together form a cable sleeve 125. The second cable plug 1100 further comprises a guidance section 130 and an enclosure 140. These components correspond to the respective components of the first cable plug 100 and will not be explained in detail again.

Instead of the first fiber holder 150 of the first cable plug 100, the second cable plug 1100 comprises a second fiber holder 1150. The second fiber holder 1150 is approximately cuboid-shaped and comprises a plurality of second slots 1420 arranged in parallel to the longitudinal direction of the second cable plug 1100. In the example depicted in Figure 7, the second fiber holder 1150 comprises four parallel second slots 1420.

Each of the second slots 1420 comprises optionally a plurality of first ribs 1440 arranged perpendicular to the extension direction of the respective second slot 1420. Each first rib 1440 extends from an upper open end of the respective second slot 1420 towards a lower closed end of the respective second slot 1420.

A second bracket 1160 is connected to the second fiber holder 1150 by means of a separable connection 1430. The second bracket 1160 may be separated from the second fiber holder 1150 by breaking the separable connection 1430.

The second fiber holder 1150 comprises a plurality of high ribs 1450. The number of high ribs 1450 arranged on the second bracket 1160 matches the number of second slots 1420. The high ribs 1450 are arranged on the second bracket 1160 such that each high rib 1450 penetrates into one of the second slots 1420 when the second bracket 1160 is mounted on the second fiber holder 1150.

The second bracket 1160 comprises a first snap-fit recess 400 arranged on one end of the second bracket 1160 and a second snap-fit recess 405 arranged on the opposite end of the second bracket 1160. The second fiber holder 1150 comprises a first snap-fit hook 410 and a second snap-fit hook 415 arranged oppositely to the first snap-fit hook 410. The second bracket 1160 can be connected to the second fiber holder 1150 by means of the snap-fit connections formed by the snap-fit recesses 400, 405 and the snap-fit hooks 410, 415. In an alternative embodiment, the second fiber holder 1150 and the second bracket 1160 may be equipped with alternative means of connecting the second bracket 1160 to the second fiber holder 1150.

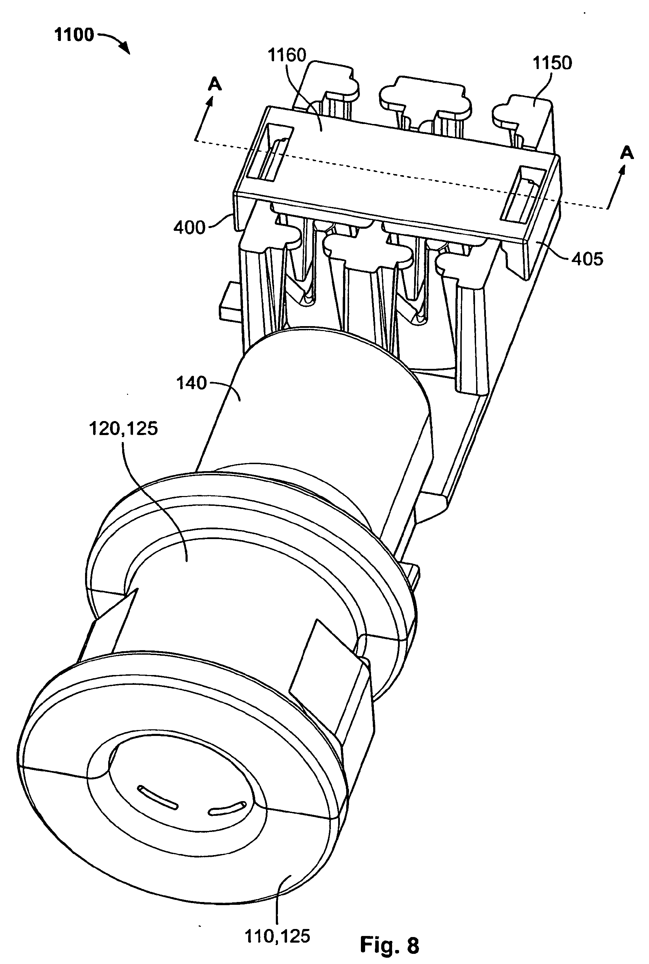

Figure 8 shows a perspective view of the second cable plug 1100 with the second bracket 1160 mounted on the second fiber holder 1150. The high ribs 1450 of the second bracket 1160 have penetrated into the second slots 1420 of the second fiber holder 1150. Any fibers 180 (not depicted in Figure 8) arranged in the second slots 1420 have thus been pressed against the first ribs 1440 arranged in the second slots 1420 by the high ribs 1450. This prevents the fibers 180 from being displaced in an axial direction of the fibers 180. Additionally, the second bracket 1160 prevents the fibers from being removed from the second slots 1420.

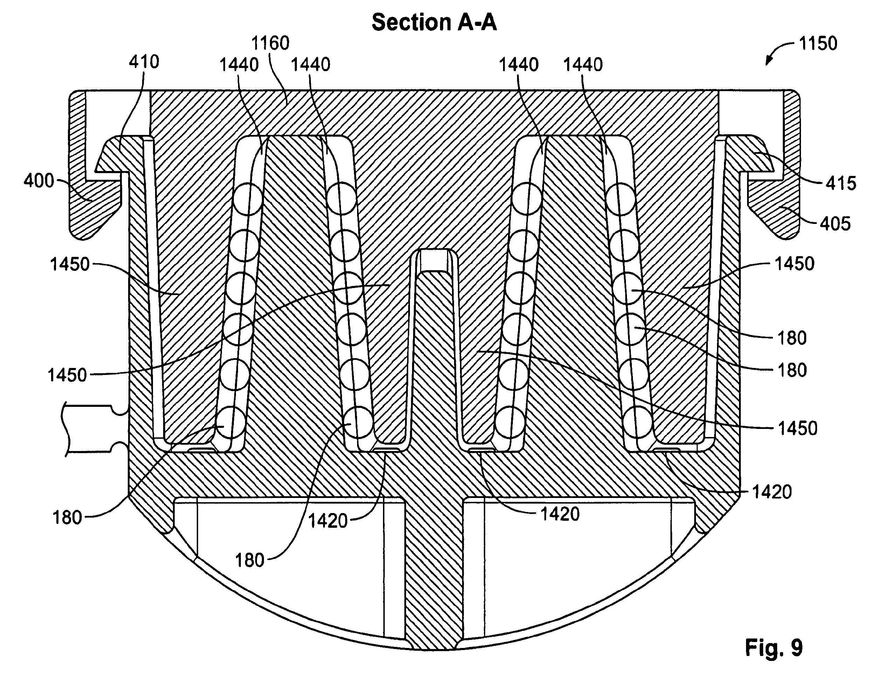

Figure 9 shows a sectional view of the second fiber holder 1150 sliced on line A-A indicated in Figure 8. The second bracket 1160 is connected to the second fiber holder 1150. The high ribs 1450 of the second bracket 1160 have penetrated into the second slots 1420 of the second fiber holder 1150. Surfaces of the high ribs 1450 are arranged substantially in parallel to surfaces of the second fiber holder 1150 forming the second slots 1420. Between each such two parallel surfaces a plurality of fibers 180 are arranged. The arrangement of the fibers 180 is such that they are stacked on top of each other and are sandwiched between the two substantially parallel surfaces. The fibers 180 are pressed against the first ribs 1440 and are thereby fixated.

Advantageously, sandwiching the fibers 180 between two substantially parallel planes ensures that about the same pressure force is exerted on each of the fibers 180. In a conventional design with downwardly narrowing slots lower fibers would receive a significantly higher pressure force than fibers on the top.

## Claims

1. A cable plug assembly (100, 1100)
comprising a cable sleeve (125) with a cable receiving section (200) for receiving a cable (170) therein,
wherein the cable plug assembly (100, 1100) further comprises a fiber holder (150, 1150) for fastening a plurality of fibers (180),
wherein the cable sleeve (125) and the fiber holder (150, 1150) are connected via an intermediate section (130),
wherein the fiber holder (150, 1150) comprises a plurality of substantially parallel slots (420, 1420) for receiving the plurality of fibers (180),
wherein the cable plug assembly (100, 1100) further comprises a bracket (160, 1160) for retaining said fibers (180) in said slots (420, 1420), **characterised in that**
said bracket (160, 1160) is connectable to the fiber holder (150, 1150) by means of a first snap-fit (400, 405, 410, 415).

2. The cable plug assembly (100, 1100) according to claim 1,
**characterised in that**
the cable sleeve (125) comprises a base part (110) and a cover part (120),
said base part (110) and said cover part (120) being connectable.

3. The cable plug assembly (100, 1100) according to claim 2,
**characterised in that**
said base part (110) and said cover part (120) are connectable by means of a second snap-fit (240, 245).

4. The cable plug assembly (100, 1100) according to any one of the previous claims,
**characterised in that**
the cable receiving section (200) of the cable sleeve (125) comprises fixation means (210, 230) for gripping a jacket (600) of the cable (170).

5. The cable plug assembly (100, 1100) according to any one of the previous claims,
**characterised in that**
each parallel slot (420, 1420) comprises a width that is larger than a diameter of a fiber (180).

6. The cable plug assembly (1100) according to any one of the previous claims,
**characterised in that**
each slot (1420) comprises at least one first rib (1440) arranged substantially perpendicular to a running direction of a fiber (180) when said fiber (180) is arranged in said slot (1420).

7. The cable plug assembly (1100) according to any one of the previous claims,
**characterised in that**
the bracket (1160) comprises a plurality of high ribs (1450),
wherein each said high rib (1450) is provided to be arranged in one of said slots (1420) when the bracket (1160) is connected to the fiber holder (1150).

8. The cable plug assembly (1100) according to claim 7, **characterised in that**
two substantially parallel planes are formed from a surface of one of said high ribs (1450) and a surface of one of said slots (1420) when said bracket (1160) is connected to the fiber holder (1150),
wherein one or more of the plurality of fibers (180) can be sandwiched between said substantially parallel planes.

9. The cable plug assembly (100, 1100) according to any one of the previous claims,
**characterised in that**
the bracket (160, 1160) is connected to the fiber holder (150, 1150) by a separable connection (1430).

10. The cable plug assembly (100, 1100) according to any one of the previous claims,
**characterised in that**
the cable plug assembly (100, 1100) further comprises an enclosure (140) for guiding the fibers (180) between the cable sleeve (125) and the fiber holder (150, 1150),
wherein the enclosure (140) is connectable to the intermediate section (130).

11. The cable plug assembly (100, 1100) according to claim 10,
**characterised in that**
the enclosure (140) is connectable to the intermediate section (130) by means of a third snap-fit (300, 305, 310, 315).

12. The cable plug assembly (100, 1100) according to any one of the previous claims,
**characterised in that**
the cable sleeve (125) comprises a first flange (250) arranged circumferentially around a first opening of the cable receiving section (200)
and a second flange (260) arranged circumferentially around a second opening of the cable receiving section (200).

13. The cable plug assembly (100, 1100) according to claim 12
**characterised in that**
the cable sleeve (125) is designed to be arranged in a cable port (500) of a seal block (190) for providing a sealed feedthrough of the cable (170), wherein the first flange (250) and the second flange (260) are designed for forming a labyrinth seal between the first flange (250) and the second flange (260) and outer flanges (700, 710) arranged in the cable port (500) of the seal block (190).

## Patentansprüche

1. Kabelsteckeranordnung (100, 1100), die eine Kabelmuffe (125) mit einem Kabelaufnahmeabschnitt (200) für das Aufnehmen eines Kabels (170) darin aufweist,
wobei die Kabelsteckeranordnung (100, 1100) außerdem einen Faserhalter (150, 1150) für das Befestigen einer Vielzahl von Fasern (180) aufweist,
wobei die Kabelmuffe (125) und der Faserhalter (150, 1150) mittels eines Zwischenabschnittes (130) verbunden sind,
wobei der Faserhalter (150, 1150) eine Vielzahl von im Wesentlichen parallelen Schlitzen (420, 1420) für das Aufnehmen der Vielzahl von Fasern (180) aufweist,
wobei die Kabelsteckeranordnung (100, 1100) außerdem eine Halterung (160, 1160) für das Halten der Fasern (180) in den Schlitzen (420, 1420) aufweist,
**dadurch gekennzeichnet, dass**
die Halterung (160, 1160) mit dem Faserhalter (150, 1150) mittels eines ersten Schnappverschlusses (400, 405, 410, 415) verbunden werden kann.

2. Kabelsteckeranordnung (100, 1100) nach Anspruch 1, **dadurch gekennzeichnet, dass**
die Kabelmuffe (125) ein Unterteil (110) und ein Abdeckteil (120) aufweist, wobei das Unterteil (110) und das Abdeckteil (120) verbunden werden können.

3. Kabelsteckeranordnung (100, 1100) nach Anspruch 2, **dadurch gekennzeichnet, dass**
das Unterteil (110) und das Abdeckteil (120) mittels eines zweiten Schnappverschlusses (240, 245) verbunden werden können.

4. Kabelsteckeranordnung (100, 1100) nach einem der vorhergehenden Ansprüche, **dadurch gekennzeichnet, dass**
der Kabelaufnahmeabschnitt (200) der Kabelmuffe (125) ein Befestigungsmittel (210, 230) für das Ergreifen eines Mantels (600) des Kabels (170) aufweist.

5. Kabelsteckeranordnung (100, 1100) nach einem der vorhergehenden Ansprüche, **dadurch gekennzeichnet, dass**
ein jeder paralleler Schlitz (420, 1420) eine Breite aufweist, die größer ist als ein Durchmesser einer Faser (180).

6. Kabelsteckeranordnung (1100) nach einem der vorhergehenden Ansprüche, **dadurch gekennzeichnet, dass**
ein jeder Schlitz (1420) mindestens eine erste Rippe (1440) aufweist, die im Wesentlichen senkrecht zu einer Laufrichtung einer Faser (180) angeordnet ist, wenn die Faser (180) im Schlitz (1420) angeordnet wird.

7. Kabelsteckeranordnung (1100) nach einem der vorhergehenden Ansprüche, **dadurch gekennzeichnet, dass**
die Halterung (1160) eine Vielzahl von hohen Rippen (1450) aufweist,
wobei eine jede hohe Rippe (1450) vorhanden ist, damit sie in einem der Schlitze (1420) angeordnet wird, wenn die Halterung (1160) mit dem Faserhalter (1150) verbunden wird.

8. Kabelsteckeranordnung (1100) nach Anspruch 7, **dadurch gekennzeichnet, dass**
zwei im Wesentlichen parallele Ebenen aus einer Oberfläche einer der hohen Rippen (1450) und einer Oberfläche eines der Schlitze (1420) gebildet werden, wenn die Halterung (1160) mit dem Faserhalter (1150) verbunden wird,
wobei eine oder mehrere der Vielzahl von Fasern (180) schichtartig zwischen den im Wesentlichen parallelen Ebenen angeordnet werden können.

9. Kabelsteckeranordnung (100, 1100) nach einem der vorhergehenden Ansprüche, **dadurch gekennzeichnet, dass**
die Halterung (160, 1160) mit dem Faserhalter (150, 1150) mittels einer trennbaren Verbindung (1430) verbunden wird.

10. Kabelsteckeranordnung (100, 1100) nach einem der vorhergehenden Ansprüche, **dadurch gekennzeichnet, dass**
die Kabelsteckeranordnung (100, 1100) außerdem eine Umhüllung (140) für das Führen der Fasern (180) zwischen der Kabelmuffe (125) und dem Faserhalter (150, 1150) aufweist,
wobei die Umhüllung (140) mit dem Zwischenabschnitt (130) verbunden werden kann.

11. Kabelsteckeranordnung (100, 1100) nach Anspruch 10, **dadurch gekennzeichnet, dass**
die Umhüllung (140) mit dem Zwischenabschnitt (130) mittels eines dritten Schnappverschlusses (300, 305, 310, 315) verbunden werden kann.

12. Kabelsteckeranordnung (100, 1100) nach einem der vorhergehenden Ansprüche, **dadurch gekennzeichnet, dass**
die Kabelmuffe (125) einen ersten Flansch (250), der peripher um eine erste Öffnung des Kabelaufnahmeabschnittes (200) angeordnet ist, und einen zweiten Flansch (260) aufweist, der peripher um eine zweite Öffnung des Kabelaufnahmeabschnittes (200) angeordnet ist.

13. Kabelsteckeranordnung (100, 1100) nach Anspruch 12, **dadurch gekennzeichnet, dass**
die Kabelmuffe (125) so konstruiert ist, dass sie in einer Kabelöffnung (500) eines Dichtungsblockes (190) für das Bereitstellen einer abgedichteten Durchführung des Kabels (170) angeordnet wird,
wobei der erste Flansch (250) und der zweite Flansch (260) für das Ausbilden einer Labyrinthdichtung zwischen dem ersten Flansch (250) und dem zweiten Flansch (260) und den äußeren Flanschen (700, 710), die in der Kabelöffnung (500) des Dichtungsblockes (190) angeordnet sind, konstruiert sind.

## Revendications

1. Assemblage de fiche de câble (100, 1100),
comprenant un manchon de câble (125) avec une section de réception du câble (200) pour recevoir un câble (170) ;
dans lequel l'assemblage de fiche de câble (100, 1100) comprend en outre un support de fibres (150, 1150) pour fixer plusieurs fibres (180) ;
dans lequel le manchon de câble (125) et le support de fibres (150, 1150) sont connectés par l'intermédiaire d'une section intermédiaire (130) ;
dans lequel le support de fibres (150, 1150) comprend plusieurs fentes pratiquement parallèles (420, 1420) pour recevoir les plusieurs fibres (180),
l'assemblage de fiche de câble (100, 1100) comprenant en outre une console (160, 1160) pour retenir lesdites fibres (180) dans lesdites fentes (420, 1420) ;
**caractérisé en ce que**
ladite console (160, 1160) peut être connectée au support de fibres (150, 1150) par l'intermédiaire d'un premier moyen d'encliquetage (400, 405, 410, 415).

2. Assemblage de fiche de câble (100, 1100) selon la revendication 1,
**caractérisé en ce que**
le manchon de câble (125) comprend une partie de base (110) et une partie de couverture (120) ;
ladite partie de base (110) et ladite partie de couverture (120) pouvant être connectées.

3. Assemblage de fiche de câble (100, 1100) selon la revendication 2,
**caractérisé en ce que**
ladite partie de base ('110) et ladite partie de couverture (120) peuvent être connectées par l'intermédiaire d'un deuxième moyen d'encliquetage (240, 245).

4. Assemblage de fiche de câble (100, 1100) selon l'une quelconque des revendications précédentes,
**caractérisé en ce que**
la section de réception du câble (200) du manchon de câble (125) comprend des moyens de fixation (210, 230) pour saisir une gaine (600) du câble (170).

5. Assemblage de fiche de câble (100, 1100) selon l'une quelconque des revendications précédentes,
**caractérisé en ce que**
chaque fente parallèle (420, 1420) comprend une largeur supérieure à un diamètre d'une fibre (180).

6. Assemblage de fiche de câble (1100) selon l'une quelconque des revendications précédentes,
**caractérisé en ce que**
chaque fente (1420) comprend au moins une première nervure (1440), agencée de manière pratiquement perpendiculaire à une direction d'extension d'une fibre (180) lorsque ladite fibre (80) est agencée dans ladite fente (1420).

7. Assemblage de fiche de câble (1100) selon l'une quelconque des revendications précédentes,
**caractérisé en ce que**
la console (1160) comprend plusieurs nervures hautes (1450)
dans lequel chaque dite nervure haute (1450) est destinée à être agencée dans l'une desdites fentes (1420) lorsque la console (1160) est connectée au support de fibres (1150).

8. Assemblage de fiche de câble (1100) selon la revendication 7,
**caractérisé en ce que**
deux plans pratiquement parallèles sont formés à partir d'une surface de l'une desdites nervures hautes (1450) et d'une surface de l'une desdites fentes (1420) lorsque ladite console (1160) est connectée au support de fibres (1150) ;
dans lequel une ou plusieurs des plusieurs fibres (180) peut être agencée en sandwich entre lesdits plans pratiquement parallèles.

9. Assemblage de fiche de câble (100, 1100) selon l'une quelconque des revendications précédentes,
**caractérisé en ce que**
la console (160, 1160) est connectée au support de fibres (150, 1150) par une connexion séparable (1430).

10. Assemblage de fiche de câble (100, 1100) selon l'une quelconque des revendications précédentes,
**caractérisé en ce que**
l'assemblage de fiche de câble (100, 1100) comprend en outre une enceinte (140) pour guider les fibres (180) entre le manchon de câble (125) et le support de fibres (150, 1150) ;
dans lequel l'enceinte (140) peut être connectée à la section intermédiaire (130).

11. Assemblage de fiche de câble (100), 1100) selon la revendication 10,
**caractérisé en ce que**
l'enceinte (140) peut être connectée à la section intermédiaire (130) par l'intermédiaire d'un troisième moyen d'encliquetage (300, 305, 310, 315).

12. Assemblage de fiche de câble (100, 1100) selon l'une quelconque des revendications précédentes,
**caractérisé en ce que**
le manchon de câble (125) comprend une première bride (250), agencée de manière circonférentielle autour d'une première ouverture de la section de réception du câble (200) ;
et une deuxième bride (260), agencée de manière circonférentielle autour d'une deuxième ouverture de la section de réception du câble (200).

13. Assemblage de fiche de câble (100, 1100) selon la revendication 12,
**caractérisé en ce que**
le manchon de câble (125) est destiné à être agencé dans un orifice de câble (500) d'un bloc d'étanchéité (190) pour assurer une traversée étanche du câble (170) ;
dans lequel la première bride (250) et la deuxième bride (260) sont destinées à former un joint à labyrinthe entre la première bride (250) et la deuxième bride (260) et des brides externes (700, 710) agencées dans l'orifice de câble (500) du bloc d'étanchéité (190).
